# EUROPÄISCHE PATENTSCHRIFT

(11) **EP 1 049 978 B1**
(45) Veröffentlichungstag und Bekanntmachung des Hinweises auf die Patenterteilung: **02.05.2003**
(21) Anmeldenummer: 99932437.9
(22) Anmeldetag: 19.01.1999
(51) Int. Cl.: G06F 11/14

(54) **VERFAHREN ZUR VERBESSERUNG DER SYSTEMVERFÜGBARKEIT NACH DEM AUSFALL VON PROZESSOREN EINER PROZESSORPLATTFORM**
METHOD FOR IMPROVING SYSTEM AVAILABILITY FOLLOWING THE FAILURE OF THE PROCESSORS OF A PROCESSOR PLATFORM
PROCEDE POUR AMELIORER LA DISPONIBILITE D'UN SYSTEME SUITE A LA DEFAILLANCE DE PROCESSEURS D'UNE PLATE-FORM DE PROCESSEURS

(30) Priorität: 20.01.1998 DE 19801992
(43) Veröffentlichungstag der Anmeldung: 08.11.2000
(73) Patentinhaber: SIEMENS AKTIENGESELLSCHAFT, 80333 München (DE)
(72) Erfinder: Kader, Hans, 81479 München (DE); Karzel, Herbert, 82234 Wessling (DE); Popovic-Berrsche, Branko, 82269 Geltendorf-Hausen (DE)
(86) Internationale Anmeldenummer: DE9900125
(87) Internationale Veröffentlichungsnummer: WO99038077

(56) Entgegenhaltungen:
- US-A- 4 521 847
- KRISHNA KUMAR R ET AL: "A FAULT-TOLERANT MULTI-TRANSPUTER ARCHITECTURE" MICROPROCESSORS AND MICROSYSTEMS, Bd. 17, Nr. 2, 1. Januar 1993, Seiten 75-81, XP000355542
- CUYVERS R ET AL: "A MODULAR MULTIPROCESSOR KERNEL FOR AUTOMATIC NON-STOP PROCESSING" INTERNATIONAL JOURNAL OF MINI AND MICROCOMPUTERS, Bd. 14, Nr. 1, 1. Januar 1992, Seiten 9-15, XP000281818

## Beschreibung

Die Erfindung betrifft ein Verfahren gemäß Patentanspruch 1.

Die Veröffentlichung "A fault-tolerant multi-transputer architecture" von R. Krishna Kumar, mit multi-processors and multi-systems Band 17 No.2, 1. Januar 1993, Seiten 75-81, XP000355542 offenbart ein Verfahren zur Verbesserung der Systemverfügbarkeit nach dem Ausfall von Prozessoren, welches beim Ausfall eines Prozessors einen Link über einen Prozessor als Bypass für den ausgefallenen Prozessor verwendet, wobei nach dem Aufbaus Links der Bypass Prozessor mit den letzten für den ausgefallenen Prozessor als Backup gespeicherten Zwischenresultanten weiter rechnet, worauf ein Parallelebetrieb begonnen wird.

Zeitgemäße Kommunikationssysteme weisen eine Mehrzahl von Prozessoren auf, die in ihrem Zusammenwirken untereinander bestimmte Aufgaben oder Teilaufgaben bearbeiten. Eine derartige Mehrzahl von Prozessoren wird auch als Prozessorplattform bezeichnet. Die Plattform wird vor der Inbetriebnahme des Kommunikationssystems administrativ festgelegt.

Während des Betriebes des Kommunikationssystems nimmt einer der Prozessoren der Prozessorplattform die zu bearbeitende Aufgabe mit hierzu erforderlichen Daten entgegen und führt eine erste Bearbeitung durch.

Nach Maßgabe des Ergebnisses wird dann ein weiterer Prozessor angesteuert, dem dann das Ergebnis der ersten Bearbeitung zugeführt wird. Dieser führt dann seinerseits weitere Bearbeitungen durch und übergibt das ermittelte Ergebnis gegebenenfalls einem weiteren Prozessor. Die Bearbeitungsschritte eines Folgeprozessors hängen somit unmittelbar vom Ergebnis des Vorläufers ab. Damit wird eine logische Kette gebildet, in die in der Regel mehrere Prozessoren der Prozessorplattform eingebunden sind. Diese Prozessoren bilden eine Teilmenge aller Prozessoren der Prozessorplattform.

Problematisch bei einer derartigen Anordnung ist, daß bei dem Ausfall lediglich eines der Prozessoren dieser logischen Kette die Bearbeitung der Aufgabe nicht mehr gegeben ist. In diesem Fall kann die Bearbeitung der Aufgabe unter Umständen nicht einmal abgebrochen werden, da die Aufgabe nicht als eine solche erkannt wird, wenn hierzu wesentliche Daten beim Ausfall verlorengegangen sind. Damit bleibt aber diese logische Kette von Prozessoren für die Bearbeitung weiterer Aufgaben blockiert.

Beim Stand der Technik werden zur Behandlung dieser Ausfälle in einem zyklischen Zeitraster Überwachungsprogramme oder Audits gestartet, die die Prozessoren einer Prozessorplattform auf Hard/- und Softwarefehler hin untersuchen. In der Regel werden diese Überwachungs- und Überprüfungsvorgänge in verkehrsschwacher Zeit vorgenommen. Das zugrunde liegende Zeitintervall kann somit unter Umständen eine recht lange Zeit in Anspruch nehmen. Für die Dauer dieses Zeitintervalles bleibt somit das Fehlverhalten unbemerkt.

Der Erfindung liegt die Aufgabe zugrunde, einen Weg aufzuzeigen wie der Ausfall eines oder mehrerer Prozessen einer Prozessorplattform effizient behandelt werden kann, um die Dynamik des Systems zu erhöhen.

Die Erfindung wird, ausgehend vom Oberbegriff des Patentanspruchs 1 durch dessen kennnzeichnende Merkmale gelöst.

Vorteilhaft an der Erfindung ist insbesondere das Bilden einer weiteren logischen Kette von Prozessoren, die der ersten logischen Kette überlagert ist. Hierbei werden signifikante Daten eines in dieser Kette angeordneten Prozessors dem in dieser Kette nachfolgenden Prozessor übergeben. Dies erfolgt unabhängig davon, welchem der Prozessoren der ersten logischen Kette das Ergebnis der Bearbeitung übergeben wird. Damit ist der Vorteil verbunden, daß ein ausgefallener Prozessor diese signifikanten Daten beim Wiederhochlauf unmittelbar beim in dieser Kette nachfolgenden Prozessor wieder zurückladen kann und damit ein Abbild der Daten wie vor dem Ausfall aufweist.

Vorteilhafte Weiterbildungen der Erfindung sind in den Unteransprüchen angegeben.

Die Erfindung wird im folgenden anhand eines Ausführungsbeispiels näher erläutert.

Es zeigen
- FIG 1: eine Prozessorplattform mit insgesamt 30 Prozessoren,
- FIG 2: eine lineare Kette von Prozessoren,

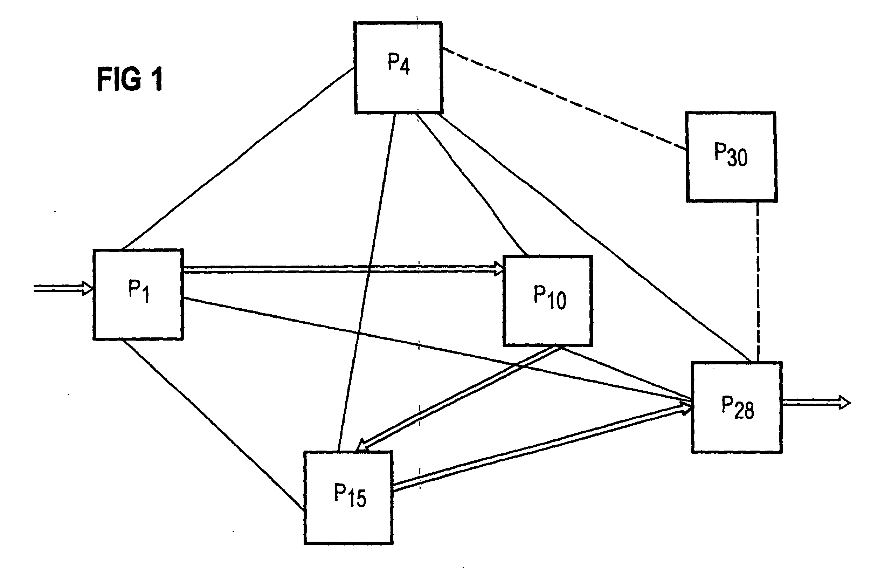

In Fig. 1 sind beispielhaft 30 Prozessoren P₁...P₃₀ einer Prozessorplattform aufgezeigt. Alle Prozessoren sind aus Sicherheitsgründen gedoppelt ausgebildet, um bei Ausfall eines Prozessores auf den redundant dazu angeordneten Prozessor umschalten zu können und sind über Verbindungsleitungen untereinander vermascht. Die Prozessoren P₁, P₁₀, P₁₅, P₂₈ sollen nun eine anstehende Aufgabe bearbeiten und bilden somit eine erste logische Kette in der in Frage kommenden Prozessorplattform. Die anstehende Aufgabe soll der Aufbau einer Verbindung sein.

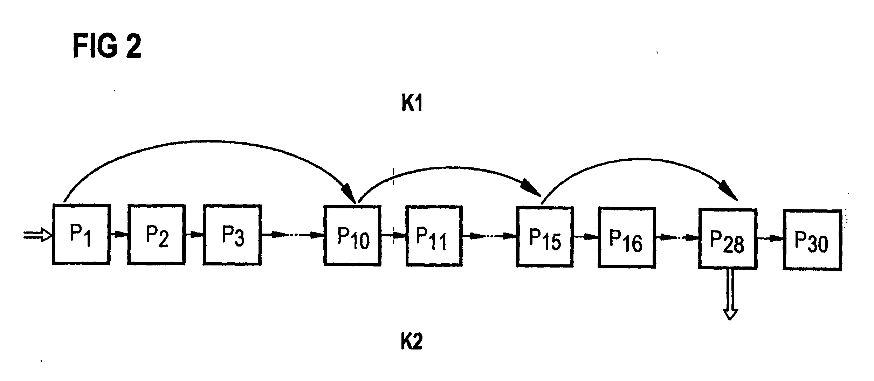

Gemäß Fig. 2 ist nun erfindungsgemäß vorgesehen, die Prozessoren P₁...P₃₀ in einer zweiten logischen Kette anzuordnen. Gemäß vorliegendem Ausführungsbeispiel wird somit der Anfang dieser Kette vom Prozessor P₁ gebildet. Diesem folgt als weiteres Glied dieser Kette der Prozessor P₂, usw. Das Ende der Kette wird vom Prozessor P₃₀ gebildet.

Die Prozessorplattform soll somit gemäß vorliegendem Ausführungsbeispiel den Auftrag erhalten eine Verbindung aufzubauen. Hierzu wird diese Aufgabe und hierzu erforderliche Daten einem der Prozessoren der ersten logischen Kette von Prozessoren zugeführt. Dies soll beispielhaft der Prozessor P₁ sein.

Die Aufgabe wird in Teilaufgaben zerlegt, wobei eine jede Teilaufgabe auf einem der in den Bearbeitungsprozeß integrierten Prozessoren P₁₀, P₁₅, P₂₈ abläuft. Dabei ist der Folgeprozessor in der Kette von der Vorbearbeitung der anderen Prozessoren abhängig.

Im Prozessor P₁ wird nun die erste Teilaufgabe bearbeitet. Gemäß dem Ergebnis des Bearbeitungsprozesses werden die dieses Ergebnis definierenden Daten dann dem Prozessor P₁₀ zugeführt, der eine weitere Verarbeitung vornimmt, bevor die Daten den Prozessoren P₁₅ und P₂₈ zugeführt werden und die Kette wieder verlassen.

Erfindungsgemäß ist nun vorgesehen, dem in der zweiten logischen Kette nachgeschalteten Prozessor P₂ signifikante Daten des Prozessors P₁ zu übermitteln. Bei den signifikanten Daten soll es sich um Daten handeln, die ein repräsentatives Abbild des physikalisch und logischen Zustandes darstellen, in dem sich der Prozessor P₁ befindet. Weiterhin beschreiben die signifikanten Daten den momentanen zustand der betreffenden Aufgabe, die in dem Prozessor P₁ gerade bearbeitet wird.

In gleicher Weise werden den in der zweiten logischen Kette nachfolgenden Prozessoren signifikante Daten des vorgeschalteten Prozessors zugeführt. Im Prozessor P₁₁ sind somit signifikante Daten des Prozessors P₁₀ gespeichert, im Prozessor P₂₃ signifikante Daten des Prozessors P₂₂ usw. Das Zuführen der signifikanten Daten kann zeitgleich zu dem Übermitteln des Ergebnisses an den in der ersten logischen Kette nachfolgend geschalteten Prozessor erfolgen. Dies Vorgehensweise ist jedoch nicht zwingend. Auch ein zyklischen Zeitintervall zwischen den Bearbeitungsprozessen ist hier denkbar. Die signifikanten Daten werden nach Beendigung der Bearbeitung der Aufgabe im Folgeprozessor wieder gelöscht.

Gemäß vorliegendem Ausführungsbeispiel wird nun davon ausgegangen, daß einer der Prozessoren zusammen mit dem redundant angeordneten Prozessor ausfällt. Dies soll beispielhaft der Prozessor P₁₅ sein. In diesem Fall gehen die Daten, die gerade bearbeitet wurden, verloren und können dem Prozessor P₂₈ nicht zur weiteren Bearbeitung zur Verfügung gestellt werden.

Der Prozessor P₁₅ wird nun unmittelbar nach dem Ausfall wieder hochgefahren. Zu diesem Zweck werden die signifikanten Daten, die dem Prozessor P₁₆ zugeführt wurden, wieder in den Prozessor P₁₅ zurückgespeichert. Damit ist dann das Wissen vor dem Ausfall wieder im Prozessor P₁₅ vorhanden und mit der Bearbeitung der Aufgabe kann weiter fortgefahren werden. Das erhaltene Ergebnis wird dann dem Prozessor P₂₈ zugeführt. Damit ist die durch den Ausfall entstandene Lücke in der logischen ersten Kette wieder geschlossen.

## Patentansprüche

1. Verfahren zur Verbesserung der Systemverfügbarkeit nach dem Ausfall von Prozessoren einer Prozessorplattform, mit wenigstens einer Prozessorplattform, die von einer Mehrzahl von Prozessoren (P₁...P₃₀) gebildet wird, wobei eine vorgegebene Aufgabe von einem Teil dieser Prozessoren (P₁, P₁₀, P₁₅, P₂₈) bearbeitet wird, indem die Aufgabe in Teilaufgaben aufgeteilt wird, die jeweils auf einem der Prozessoren (P₁, P₁₀, P₁₅, P₂₈) bearbeitet werden, womit eine erste logische Kette (K₁) für die Dauer der Bearbeitung der Aufgabe gebildet wird,
**dadurch gekennzeichnet,**
**daß** eine zweite logische Kette (K₂) aus allen der Prozessoren (P₁...P₃₀) der Prozessorplattform gebildet wird, in der physikalische and logische Prozessordaten sowie den momentanen Bearbeitungszustand der Aufgabe beschreibende Daten eines in dieser Kette (K₂) angeordneten Prozessors dem in dieser Kette (K₂) nachfolgenden Prozessor übergeben werden, und daß beim Wiederhochlauf eines ausgefallenen Prozessors die davor genannten Daten vom in der zweiten logischen Kette (K₂) nachfolgenden Prozessor wieder zurückgeladen werden.

2. Verfahren nach einem der vorstehenden Ansprüche,
**dadurch gekennzeichnet,**
**daß** physikalische and logische Prozessordaten sowie den momentanen Bearbeitungszustand der Aufgabe beschreibende Daten nach Beendigung der Bearbeitung der Aufgabe im Folgeprozessor gelöscht werden.

## Claims

1. Method for improving system availability after the failure of processors in a processor platform, having at least one processor platform formed by a plurality of processors (P₁...P₃₀), where a prescribed task is processed by some of these processors (P₁, P₁₀, P₁₅, P₂₈) by virtue of the task being split into subtasks which are each processed on one of the processors (P₁, P₁₀, P₁₅, P₂₈), thus forming a first logical chain (K₁) for the duration of the task's processing,
**characterized**
**in that** a second logical chain (K₂) comprising all the processors (P₁...P₃₀) in the processor platform is formed in which physical and logical processor data and data describing the task's current processing state from a processor arranged in this chain (K₂) are transferred to the next processor in this chain (K₂),
and **in that**, when a failed processor is restarted, the aforementioned data are loaded back from the next processor in the second logical chain (K₂) again.

2. Method according to one of the preceding claims,
**characterized**
**in that** physical and logical processor data and data describing the task's current processing state are deleted when processing of the task in the subsequent processor has ended.

## Revendications

1. Procédé pour améliorer la disponibilité d'un système après la défaillance de processeurs d'une plate-forme de processeurs, comprenant au moins une plate-forme de processeurs qui est formée d'une multiplicité de processeurs (P₁ ... P₃₀), une tâche prescrite étant traitée par une partie de ces processeurs (P₁, P₁₀, P₁₅, P₂₈) en divisant la tâche en des sous-tâches qui sont traitées, respectivement, sur l'un des processeurs (P₁, P₁₀, P₁₅, P₂₈), une première chaîne (K₁) logique étant formée pour la durée du traitement de la tâche, **caractérisé**
**en ce que** l'on forme une deuxième chaîne (K₂) logique constituée de tous les processeurs (P₁ ... P₃₀) de la plate-forme de processeurs, dans laquelle sont transmises les données physiques et logiques ainsi que l'état instantané de traitement des données décrivant la tâche d'un processeur disposé dans cette chaîne (K₂) au processeur suivant dans cette chaîne (K₂) et en ce que, lorsque l'on remet en route un processeur qui a subi une défaillance, on recharge les données mentionnées précédemment du processeur suivant dans la deuxième chaîne (K₂) logique.

2. Procédé suivant l'une des revendications précédentes,
**caractérisé en ce que** l'on efface les données physiques et logiques de processeur ainsi que des données décrivant l'état instantané de traitement de la tâche après achèvement du traitement de la tâche dans le processeur suivant.
